# EUROPÄISCHE PATENTANMELDUNG

(11) **EP 1 779 717 A1**
(43) Veröffentlichungstag der Anmeldung: **02.05.2007**
(21) Anmeldenummer: 06021746.0
(22) Anmeldetag: 17.10.2006
(51) Int. Cl.: A01D 67/02, A01B 51/02

(54) **Sichtfeldverbesserung in Verbindung mit selbstfahrenden landwirtschaftlichen Arbeitsmaschinen**

(30) Priorität: 28.10.2005 DE 102005052143
(71) Anmelder: CLAAS Saulgau GmbH, 88348 Bad Saulgau (DE)
(72) Erfinder: Altepost, Helmut, 48477 Hörstel-Riesenbeck (DE)

(57) **Zusammenfassung**

Die Erfindung betrifft ein Verfahren und eine Vorrichtung zum Betreiben einer selbstfahrenden Erntemaschine (1), insbesondere einen Feldhäcksler oder einen Mähdrescher, mit einem Fahrgestell (8) und einer Fahrerkabine (3), wobei die Lage und/oder Ausrichtung der Fahrerkabine (3) relativ zum Fahrgestell (8) auch im laufenden Arbeitsprozess verändert werden kann.

## Beschreibung

Die Erfindung betrifft ein Verfahren und eine Vorrichtung zur Sichtfeldverbesserung für den Fahrer von selbstfahrenden Arbeitsmaschinen, insbesondere für Feldhäcksler und Mähdrescher, gemäß dem Oberbegriff des Anspruchs 1.

### Stand der Technik

Selbstfahrende Arbeitsmaschinen der vorgenannten Art werden vom Fahrersitz der Fahrerkabine aus vom Fahrer gesteuert. Die Fahrerkabine ist dabei fester Bestandteil des Fahrgestells der Arbeitsmaschine.

Insbesondere bei großen Arbeitsbreiten der Vorsatzgeräte von Feldhäckslern und Mähdreschern, es kann sich beispielsweise um Maisgebisse oder Pflückvorsatzgeräte handeln, und gerade in Verbindung beim Abernten von hohen Maispflanzen, kann der Fahrer des Feldhäckslers oder Mähdreschers die Bestandskante nicht mehr sicher einsehen. Dieses gilt umso mehr, wenn die Maispflanzen eine Pflanzenhöhe von Mehr als 3 Metern erreichen.
Der Fahrer blickt während der Arbeit auf dem Feld in seiner Arbeitsposition auf dem Fahrersitz in der Fahrzeugkabine insbesondere bei hohen Maispflanzen unentwegt in eine grüne Wand des vor ihm befindlichen Pflanzenbestandes, wobei dem Fahrer dabei eine hohe Konzentrationsfähigkeit hinsichtlich der Ernteprozessbeobachtung und des weiteren Ablaufgeschehens hinsichtlich Fahrzeuglenkung und ggf. Übergabe des Erntegutes an Begleitfahrzeuge abverlangt wird und wobei dieses gleichzeitig in einer monotonen und zugleich ergonomisch ermüdenden Umgebung durch die eingeschränkten Sichtverhältnisse stattfindet.

Damit einhergehend kann die Aufmerksamkeit des Fahrers für unerwartet eintreffende Ereignisse, die ihm ein schnelles Reaktionsvermögen abverlangen, durch eben diese Monotonie der sich gleichförmig bewegenden Pflanzenwand mit eingeschränkter Sicht in entscheidenden Augenblicken dadurch herabgesetzt sein, welches nicht zuletzt das Restrisiko zur Herbeiführung von Schadensfällen oder Unfällen erhöht, wie dieses beispielsweise durch Kollision mit Hindernissen, wie Pfählen, Grenzsteinen, Begleitfahrzeugen aber auch mit Lebewesen der Fall sein kann. Dadurch bedingt nimmt das Unfallrisiko mit Menschen oder Tieren in Berührungskontakt zu geraten zu, weil der Fahrer die Bestandskante u. U. nur unzureichend einsehen kann.

### Aufgabenstellung

Hier setzt die Aufgabe der Erfindung an, um einerseits das Problem der Bestandskantenbeobachtung durch Sichtfeldeinschränkung und -behinderung bei großen Arbeitsbreiten und hohen Pflanzenbeständen im Allgemeinen, und im besonderen auch bei hohen Pflanzenbeständen das Problem der Monotonie, hervorgerufen durch die Blickfixierung des Fahrers auf die prozessbedingten Bewegungsabläufe der "grünen Wand" mit den eben stark eingeschränkten Sichtverhältnissen, weitestgehend zu beheben.

### Lösung der Aufgabe

Die Erfindung löst das Problem dadurch, dass die Fahrerkabine und damit der Beobachtungsstandort des Fahrers eines Feldhäckslers oder Mähdreschers relativ und ortsveränderlich zum Fahrgestell sowohl im Stillstand als auch während des laufenden Arbeitsprozesses neu positioniert d.h. verändert werden kann.

Gelöst wird die Aufgabe der Erfindung mit den kennzeichnenden Merkmalen der unabhängigen Ansprüche 1 und 3. Weitere vorteilhafte Ausgestaltungen der Erfindung sind den abhängigen Ansprüchen, der Beschreibung und den Figurendarstellungen zu entnehmen.

Die Erfindung sieht dabei vor, die Fahrerkabine an oder auf einem Stellorgan als Hubwerk zu lagern, welches es ermöglicht, die Fahrerkabine gegenüber dem Fahrgestell des Feldhäckslers oder Mähdreschers wahlweise anzuheben, abzusenken oder quer zur Fahrtrichtung zu verschieben. Da die Fahrerkabine gleichzeitig den Führerstand der gesamten Maschine darstellt verlagert sich damit auch die Sitzhöhe des Fahrers über Grund und ggf. quer zur Fahrtrichtung , so dass er nunmehr je nach Höhenlage über die Pflanzen hinweg sehen kann und damit von oben herab auf das noch vor ihm liegende unbearbeitete Feld und den Pflanzenbestand herabsehen kann. Somit ist es ihm nunmehr wieder bei hohen Pflanzenbeständen möglich, über diese hinweg zu sehen, um damit auch die Bestandskante wieder deutlich erkennen zu können. Damit einhergehend ist es ihm ebenfalls möglich von oben herab in den Pflanzenbestand hineinsehen zu können um damit rechtzeitig Menschen oder z. B. freilaufende Tiere erkennen zu können, welches ihm eine frühere Reaktion zum Anhalten des Feldhäckslers oder Mähdreschers ermöglicht, welches das daraus erwachsende Restrisiko eines Unfalls erheblich mindert.

Somit kann die Fahrerkabine nicht nur relativ in ihrer Höhe sondern auch relativ zur Fahrspur und damit quer zur Fahrtrichtung verschoben werden und für den Straßentransport des Fahrzeugs wieder in ihre Ausgangslage zurück versetzt werden.

Des Weiteren kann die Fahrerkabine auch auf einem Stellorgan, ausgebildet als schwenkbeweglicher Hubarm, der auch längenveränderbar z.B. teleskopierbar und auf einer Drehscheibe oder einem Drehkranz gelagert sein kann, gelagert sein, so dass die Fahrerkabine nicht nur in ihrer Höhe sondern auch nach vorn und zur Seite, d.h. nach links und nach rechts verschwenkt werden kann. Somit kann sich der Fahrer auch näher an die Bestandskante heranbewegen und damit auch seine Position relativ zum Begleitfahrzeug, welches das Erntgut aufnimmt, verändern.

Dabei kann die Fahrerkabine zusätzlich auch über Parallelogrammlenker so geführt und gesteuert sein, dass die Fahrerkabine stets in waagerechter Position und dabei stets auch in Fahrtrichtung ausgerichtet gehalten wird.

In einer weiteren vorteilhaften Ausgestaltung der Erfindung kann die Fahrerkabine über einen Dreh- bzw Schwenkantrieb verfügen, so dass die Fahrerkabine nicht nur relativ zum Fahrgestell angehoben oder abgesenkt, längs und quer verschoben werden kann, sondern auch in einer etwa horizontalen Ebene relativ zum Fahrgestell verdreht werden kann.

Letzteres beinhaltet insbesondere den Vorteil, dass bei Entlastung des Fahrers bei automatischen Lenksystemen dieser auch eine Position mit Blickrichtung schräg oder seitlich zur Fahrtrichtung einnehmen kann, um dabei gleichermaßen die Vorwärtsbewegung, die Überladung und die Bestandskante im Blickfeld haben zu können.

Dieses liefert u.a. auch einen Beitrag um die zuvor genannte aufmerksamkeitsmindernde Monotonie zu durchbrechen, welches zu nicht zu unterschätzenden ergonomischen Vorteilen insbesondere zur Vermeidung von risikobehafteten Betriebszuständen beitragen kann.

### Ausführungsbeispiel

Nähere Einzelheiten der Erfindung sind den nachfolgenden Figurendarstellungen und deren Beschreibungen zu entnehmen.

### Bezugszeichenliste

- 1: Trägerfahrzeug (Feldhäcksler oder Mähdrescher)
- 2: Vorsatzgerät (Maisgebiss oder Pflückvorsatz)
- 3: Fahrerkabine
- 4: Vorderachse
- 5: vertikale Längsmittelebene
- 6: Drehkranz
- 7: Hochachse
- 8: Fahrgestell
- 9: Stellorgan
- 10: Drehkranz
- 11: Hochachse
- 12: Huborgan
- 13: Hub- und Schwenkvorrichtung
- 14: Hubstrebe
- 15: Parallelogrammlenker
- 16: Hubstrebe
- 17: Parallelogrammlenker
- 18: Arbeitsbreite
- 19: Gelenkpunkte
- 20: Gelenkpunkte
- 21: Gelenkpunkte
- 22: Arbeitsbreite
- B: Hauptblickrichtung
- F: Fahrtrichtung
- H: Höhe über Grund
- ΔH: Höhendifferenzverschiebung
- ΔX: Längsverschiebung
- ΔY: Querverschiebung
- α: Drehwinkel (Schwenkwinkel)
- β: Drehwinkel (Schwenkwinkel)
- +X,-X: Raumkoordinate
- +Y,-Y: Raumkoordinate

Es zeigen:
- Fig. 1: zeigt einen Feldhäcksler mit einem Vorsatzgerät mit abgesenkter Fahrerkabine in einer Seitenansicht
- Fig. 2: zeigt einen Feldhäcksler mit einem Vorsatzgerät mit angehobener Fahrerkabine in einer Seitenansicht
- Fig. 2a: zeigt einen Feldhäcksler mit einem Vorsatzgerät mit angehobener Fahrerkabine auf einem Stellorgan in einer Seitenansicht
- Fig. 3: zeigt einen Feldhäcksler mit einem Vorsatzgerät mit abgesenkter Fahrerkabine in einer Draufsicht
- Fig.4: zeigt einen Feldhäcksler mit einem Vorsatzgerät mit angehobener und verdrehter Fahrerkabine in einer Draufsicht
- Fig.5: zeigt einen Feldhäcksler mit einem Vorsatzgerät mit angehobener und verschobener Fahrerkabine in einer Draufsicht
- Fig.5a: zeigt einen Feldhäcksler mit einem Vorsatzgerät mit angehobener und verschobener Fahrerkabine in einer Draufsicht analog Fig.5 in einer anderen Stellung der Fahrerkabine mit Hauptblickrichtung zur Seite und entgegen der Fahrtrichtung
- Fig.5b: zeigt einen Feldhäcksler mit einem Vorsatzgerät mit angehobener und verschobener Fahrerkabine in einer Draufsicht analog Fig.5 in einer anderen Stellung der Fahrerkabine mit Querversatz zur vertikalen Längsmittelebene und mit Hauptblickrichtung in Fahrtrichtung

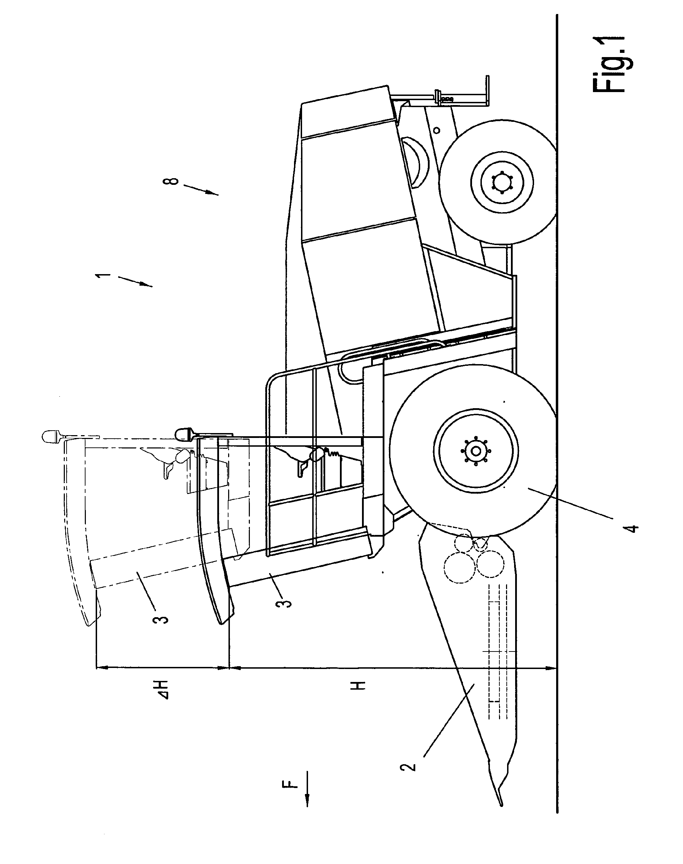

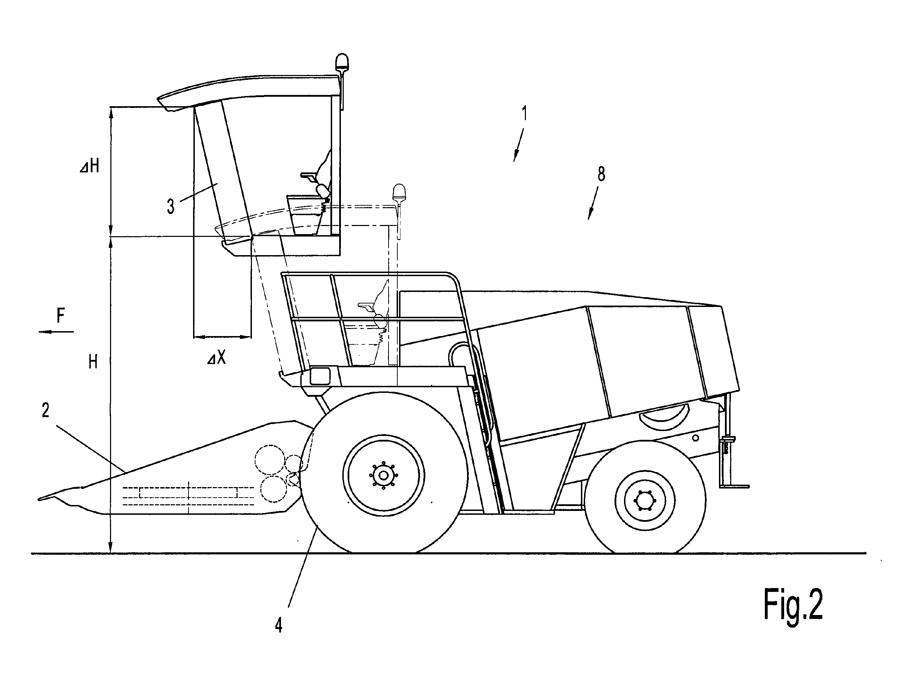

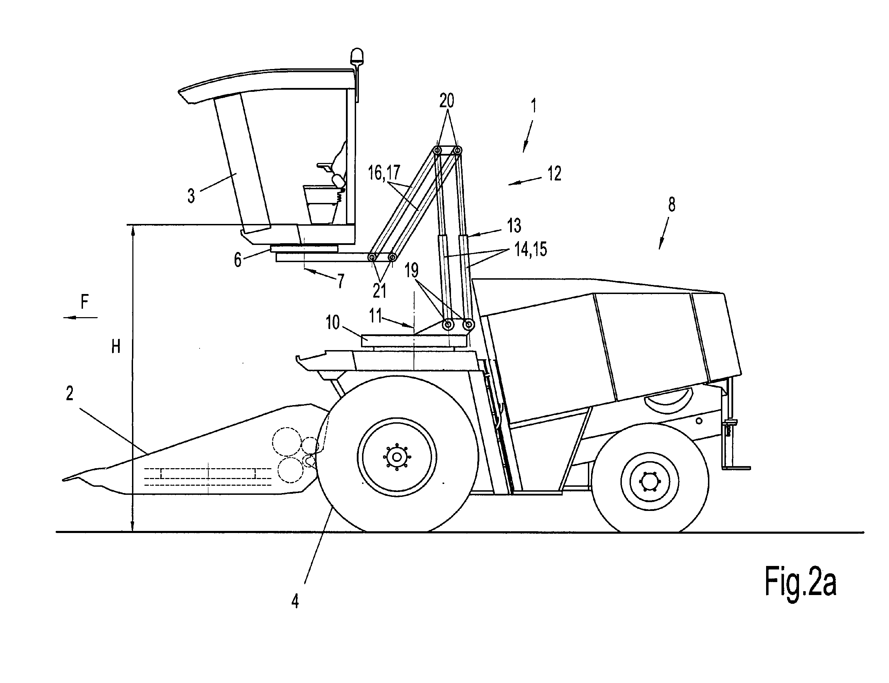

Fig. 1 zeigt einen Feldhäcksler 1 mit einem Vorsatzgerät 2 mit abgesenkter Fahrerkabine 3 und Fig. 2 mit angehobener Fahrerkabine 3 in einer Seitenansicht nach der Erfindung in prinzipieller Darstellung.

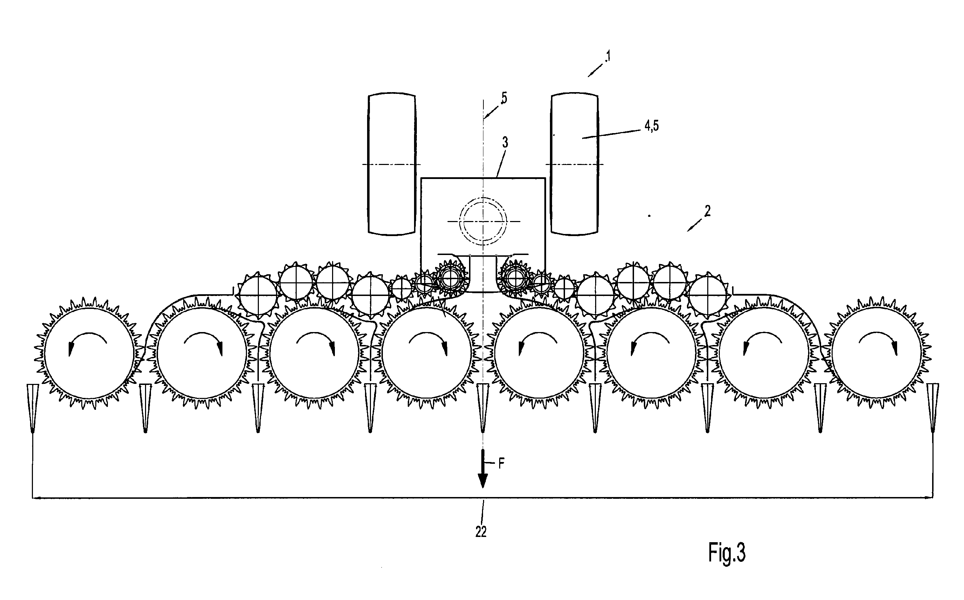

Fig. 3 zeigt den Feldhäcksler 1 gemäß Fig.1 mit dem Vorsatzgerät mit abgesenkter Fahrerkabine, d.h. in der Normalstellung in einer Draufsicht. Das Vorsatzgerät 2 symbolisiert ein Maisgebiss 2 mit großer Arbeitsbreite 22, beispielsweise mit einer Arbeitsbreite von 9 Metern. Die Normalstellung der Fahrerkabine ist gekennzeichnet durch die abgesenkte Fahrerkabine 3 in der Normalhöhe H über Grund. In dieser Position verschwindet der Hub der Fahrerkabine als Differenzbetrag ΔH zu Null.

Fig. 2 zeigt den Feldhäcksler 1 mit dem Vorsatzgerät 2 mit der um den Differenzbetrag ΔH angehobenen Fahrerkabine 3 in einer Seitenansicht. Dieses erlaubt dem Fahrer eine höhere Sitzposition über Grund um den Differenzbetrag ΔH gegenüber der Normalstellung in der Höhe H, so dass er den noch stehenden Pflanzenbestand von oben herab sehend besser im Sichtfeld hat und diesen damit besser überblicken kann. Gleichzeitig wurde die Fahrerkabine 3 um den Betrag AX in Fahrtrichtung F vorbewegt, welches zusätzlichen Raum schaffen kann, um die Fahrerkabine 3 um die Dreh- bzw. Hochachse 7 eines Drehkranzes 6 drehen zu können. Dieses ermöglicht es dem Fahrer seine Hauptblickrichtung B zu verändern, z.B. in Richtung der Überladung auf ein Begleitfahrzeug.

Fig. 2a zeigt einen Feldhäcksler 1 mit einem Vorsatzgerät 2 mit angehobener Fahrerkabine 3 auf einem Ausführungsbeispiel eines Stellorgans 9, welches als Hubarm 12 ausgebildet ist, in einer Seitenansicht analog zu Fig.2. Das Stellorgan 9 besteht im Wesentlichen aus einer Hub- und Schwenkvorrichtung 13, bestehend aus Hubstreben 14,16, die als Parallelogrammlenker 15 bzw. 17 zusammengefasst sind. Die paarweise zu Parallelogrammlenkern 15,17 zusammengefassten Hubstreben 14 und 16 sind in den Gelenkpunkten 19,20,21 untereinander und miteinander drehbeweglich verbunden und sie stützen die Fahrerkabine auf dem Fahrgestell 8 ab. Sie sind aber gleichzeitig mittels geeigneter Antriebs- bzw. Sperrelemente wahlweise untereinander in bekannter Weise beweglich antreibbar oder alternativ in ihrer jeweiligen Position feststellbar. Die Hubstreben 14 der Parallelogrammlenker 15 sind in dem Ausführungsbeispiel längenveränderbar bzw. teleskopierbar, so dass diese im Wesentlichen die Höhenlage der Fahrerkabine oberhalb des Fahrgestells 8 bzw. über Grund bestimmen können.

Am freien Ende der Parallelogrammlenker 17 ist die Fahrerkabine 3 angelenkt, die sich wiederum auf einem Drehkranz 6 abstützt, der ebenfalls am freien Ende der Parallelogrammlenker 17 abstützt. Dabei kann die Fahrerkabine 3 auch um die Hochachse 7 des Drehkranzes 6 beispielsweise beidseitig zur Längsmittelebene um je einen Winkel β bis zu ±120° verschwenkt werden, so dass es dem Fahrer möglich ist, seine Hauptblickrichtung B nicht nur zur Seite sondern auch teilweise nach hinten zu lenken. Dieses kann insbesondere für den Überladevorgang von Vorteil sein.

Das gesamte Stellorgan 9 ist auf einem Drehkranz 10 gelagert, so dass dieses einschließlich Fahrerkabine 3 beidseitig der Längsmittelebene beispielsweise bis zu ±90° verschwenkt werden kann. Unter Einbeziehung der Längsverschiebung ΔX einschließlich der Verschwenkung des Stellorgans 9 bzw. des gesamten Hubarms 12 mit dem Dreh- bzw. Schwenkwinkel α um die Hochachse 11 und einer Rückverschwenkung der Fahrerkabine 3 um einen angepassten Dreh- bzw. Schwenkwinkel β kann somit eine Querverlagerung der Fahrerkabine 3 im Sinne Querverschiebung ΔY um einen Betrag ΔY herbeigeführt werden, bei dem die Ausrichtung der Fahrerkabine, d.h. die Hauptblickrichtung B des Fahrers frei wählbar ist, wobei diese aber auch in Richtung der Fahrtrichtung F ausgerichtet sein kann. Somit ist es dem Fahrer möglich, seinen Standort relativ zum Fahrgestell 8 durch ΔX und ΔY-Verschiebungen bei gleichzeitiger Veränderung oder Anpassung seiner Ausrichtung der Hauptblickrichtung B zu variieren bzw. zu verändern.

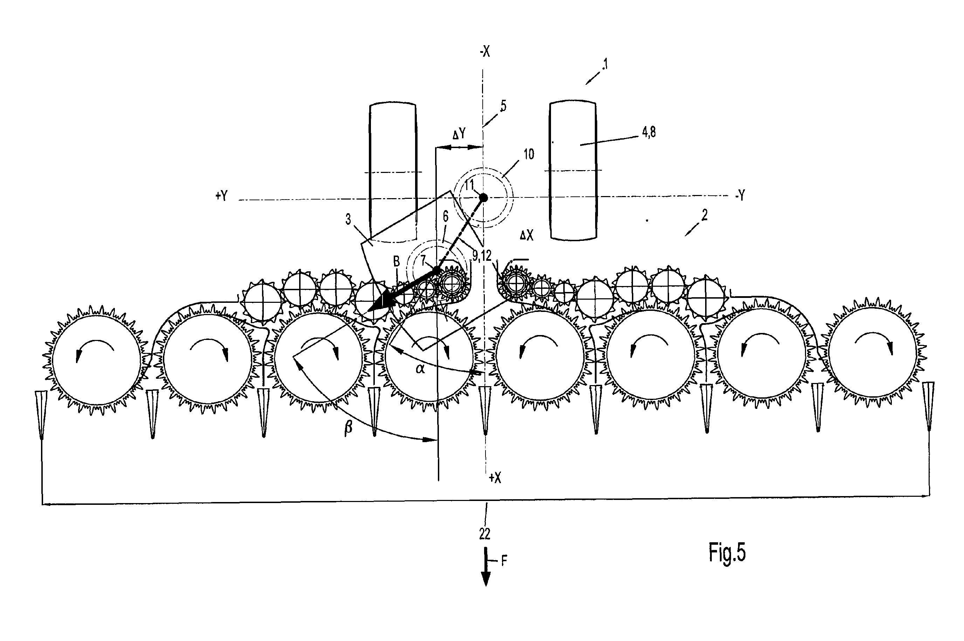

Fig.4 zeigt den Feldhäcksler 1 mit dem Vorsatzgerät 2 mit angehobener und um die Drehachse 7 des Drehkranzes 6 mit dem Drehwinkel β verdrehter Fahrerkabine 3 in einer Draufsicht. Dadurch kann sich der Fahrer besser der Bestandskante zuwenden.

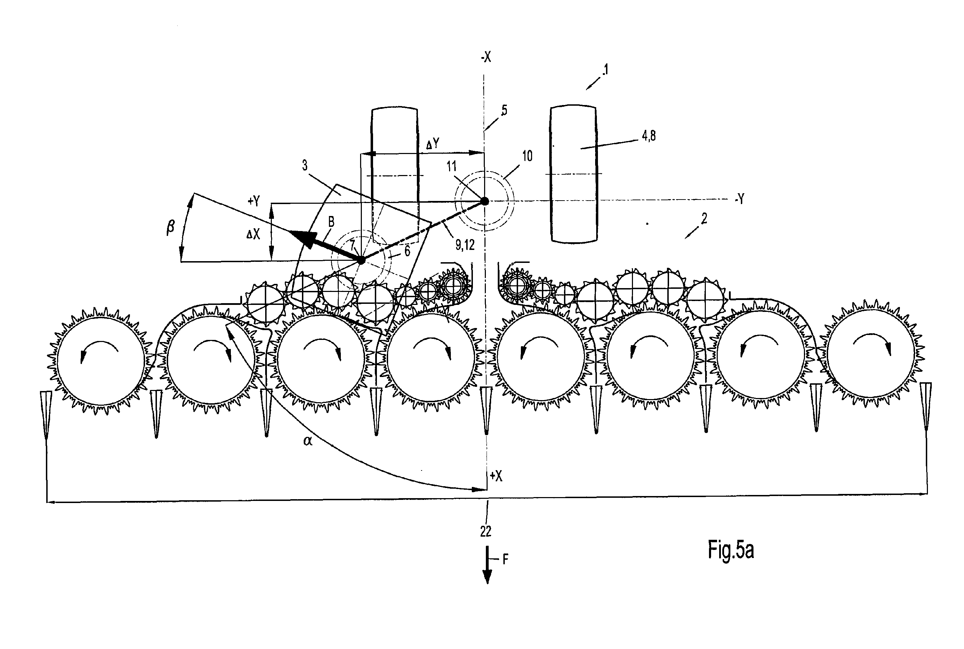

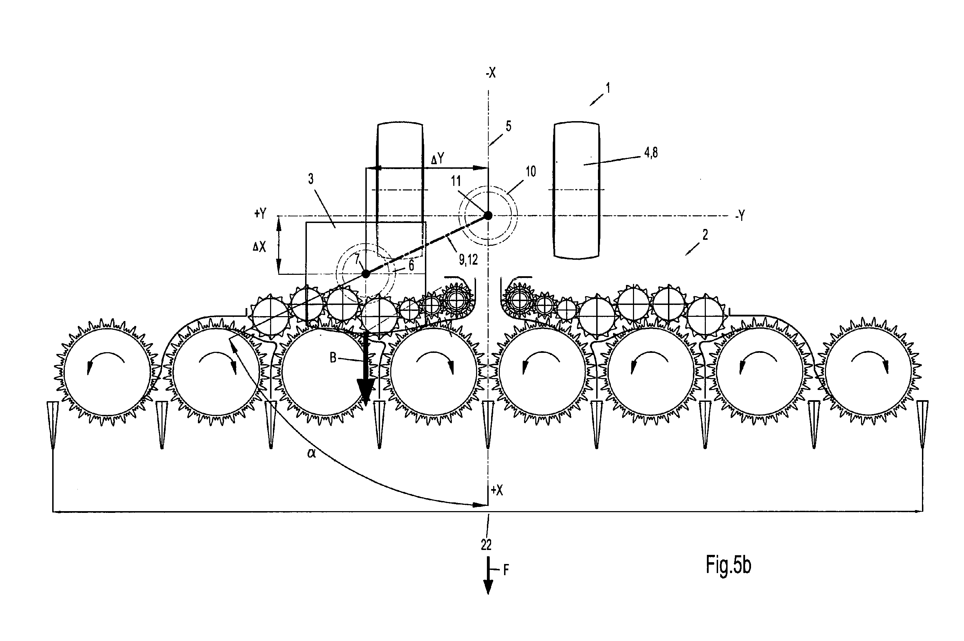

Fig.5 zeigt den Feldhäcksler 1 mit einem Vorsatzgerät 2 mit angehobener und zweidimensional verschobener Fahrerkabine in einer Draufsicht. Zur besseren Orientierung ist durch die Hochachse 11 des Drehkranzes 7 ein orthogonales Koordinatensystem mit den Hauptkoordinaten X (+X,-X) und Y(+Y,-Y) dargestellt, auf die sich auch die Dreh- bzw. Schwenkwinkel α,β beziehen. Das Huborgan 12 ist symbolisch als Verbindungslinie zwischen den Hochachsen 11 und 6 der Drehkränze 10 und 6 angedeutet. Dabei ist die Fahrerkabine zum einen um den Betrag ΔX und zum anderen um den Betrag ΔY quer zur Fahrtrichtung F verschoben.

Fig.5a zeigt einen Feldhäcksler mit einem Vorsatzgerät mit angehobener und verschobener Fahrerkabine in einer Draufsicht analog Fig.5, jedoch in einer anderen Stellung der Fahrerkabine mit Hauptblickrichtung B zur Seite gewand und teilweise entgegen der Fahrtrichtung F und sie zeigt insbesondere die Veränderung der Drehwinkel α und β relativ zur Fig.5.

Fig.5b zeigt einen Feldhäcksler mit einem Vorsatzgerät mit angehobener und verschobener Fahrerkabine in einer Draufsicht analog Fig.5, jedoch in einer anderen Stellung der Fahrerkabine und mit Querversatz ΔY zur vertikalen Längsmittelebene 5 und mit Hauptblickrichtung B in Fahrtrichtung F.

Alternativ zu dem dargelegten Ausführungsbeispiel sind auch andere Huborgane möglich. In einer besonders einfachen Ausführung kann die Fahrerkabine gewissermaßen auf einem Scherenhubtisch als Antriebs- und Stellorgan gelagert und querverrückbar sein. Das Prinzip des Scherhubtisches ist dem Fachmann bekannt und es bedarf an dieser Stelle daher keiner näheren Erläuterung. Die Scheren eines Scherenhubtisches können beispielsweise mittels eines Hydraulikzylinders oder auch von einem Spindelantrieb betätigt werden. Antriebe dieser Art können elektrisch oder aber auch von Druckfluiden beaufschlagt werden, wobei die Fahrerkabine in Ihrer angehobenen Position dann besonders einfach durch Rückschlagventile arretiert werden kann.

Alternativ können die Scheren aber auch von schwenkbeweglichen Schwingen bzw. Hubstreben, die von einem Hydraulikzylinder abgestützt und betätigt werden, ersetzt werden. Werden die Schwingen dann auch noch als längenveränderbare Ausleger ausgebildet, so lässt sich damit gleichzeitig auch eine ΔX- bzw. ΔY-Verschiebung erzeugen.

Auch ist es möglich, die gesamte Fahrerkabine 3 auf einem einzigen schwenkbeweglichen Ausleger als drehbare Säule mit einem Auslegerarm zu lagern und diesen mit einem einzigen Hydraulikzylinder zu betätigen und auf diesem abzustützen, so dass damit Höhenbewegungen durchgeführt werden können. Dabei kann die drehbare Säule nach dem Prinzip des Säulenschwenkkrans in einer einfachen und vorteilhaften Ausgestaltung dieses Auslegers an seinem gebundenen Ende am Fahrgestell fußseitig auf einem Drehkranz gelagert sein und an seinem freien Ende kann die Fahrerkabine ebenfalls auf einem Drehteller in einem Drehkranz gelagert sein, so dass den Höhenbewegungen zusätzlich Schwenkbewegungen relativ zum Fahrgestell zugeordnet werden können und wobei die Fahrerkabine zusätzlich Drehbewegungen nunmehr relativ zum Schwenkarm und relativ zur drehbaren Säule und damit gleichzeitig auch relativ zum Fahrgestell ausführen kann. Ist der Ausleger dabei gleichzeitig als längenveränderbarer Ausleger, z.B. als Teleskopausleger ausgebildet, so kann den vorgenannten Bewegungen zusätzlich eine weitere ΔX und ΔY-Verschiebung überlagert werden, welche der Fahrer vom Sitz seiner Fahrerkabine aus steuern kann.

Auch in der dargestellten Position der Fahrerkabine gemäß Fig.5 lässt sich damit die Fahrerkabine 3 ebenfalls um die Hochachse 7 eines Drehkranzes 6 um einen Schwenkwinkel β verdrehen, so dass der Fahrer aus dem Inneren der Fahrerkabine heraus sich in die verschiedenen Positionen der Fahrerkabine 3 hineinbewegen kann.

Es liegt im Können und Wissen des Fachmanns, derartige Stellorgane 9 bzw. Hub- und Schwenkeinrichtungen 13 mit den entsprechenden Antriebsmitteln auszugestalten, so dass an dieser Stelle auf die Beschreibung der weiteren Ausgestaltung derartiger Stellorgane verzichtet werden kann. Als Antriebsmittel eignen hierbei vorzugsweise für die Hubbewegungen Hydraulik- oder Pneumatikzylinder, und für die Schenkbewegungen Hydraulik- Pneumatik- oder Elektromotore vorzugsweise als Stirnrad- oder Scheckengetriebemotore.

Damit kann der Fahrer als mitfahrender Beobachter in seiner Fahrerkabine 3 den gesamten Ernteprozesses mit den Vorteilen der Erfindung besser beobachten und kontrollieren und dabei seinen Standort und seine Ausrichtung relativ zum Fahrgestell 8 und damit zur Fahrtrichtung F, sowohl was die Höhenlage ΔH über Grund, als auch was die ΔX bzw. ΔY-Verschiebung längs und/oder quer zur Fahrtrichtung und auch was sein Hauptblickrichtung relativ zum Fahrgestell durch Drehung der Fahrerkabine um den Drehwinkel β, den momentanen Erfordernissen entsprechend anpassen und korrigieren, welches eine erhebliche Sichtfeldverbesserung an die jeweilige Situation beinhaltet. In besonders vorteilhafterweise kann die Steuerung der Veränderungen der Lage (ΔH,ΔX,ΔY) und/oder der Ausrichtung (β) vom Fahrer von einem Steuerelement insbesondere von einem Joystick aus der Fahrerkabine (3) heraus durchgeführt werden kann.

## Patentansprüche

1. Verfahren zum Betreiben einer selbstfahrenden Erntemaschine (1), insbesondere Feldhäcksler oder Mähdrescher, mit einem Fahrgestell (8) und einer Fahrerkabine (3), **dadurch gekennzeichnet, dass** die Lage und/oder Ausrichtung der Fahrerkabine (3) relativ zum Fahrgestell (8) verändert werden kann.

2. Verfahren nach Anspruch 1, **dadurch gekennzeichnet, dass** die Lage und/oder Ausrichtung der Fahrerkabine (3) während des laufenden Arbeitsprozesses relativ zum Fahrgestell verändert werden kann.

3. Vorrichtung zum Betreiben einer selbstfahrenden Erntemaschine (1), insbesondere Feldhäcksler oder Mähdrescher, mit einem Fahrgestell (8) und einer Fahrerkabine (3), **dadurch gekennzeichnet, dass** die Lage und/oder Ausrichtung der Fahrerkabine (3) relativ zum Fahrgestell (8) verändert werden kann.

4. Vorrichtung nach Anspruch 3, **dadurch gekennzeichnet, dass** die Lage und/oder Ausrichtung der Fahrerkabine (3) während des laufenden Arbeitsprozesses relativ zum Fahrgestell (8) verändert werden kann.

5. Vorrichtung nach Anspruch 3, **dadurch gekennzeichnet, dass** die Höhenlage der Fahrerkabine (3) über Grund und relativ zum Fahrgestell (8) durch Verschiebung um einen Betrag (ΔH) verändert werden kann.

6. Vorrichtung nach Anspruch 3, **dadurch gekennzeichnet, dass**. die Lage der Fahrerkabine (3) im Wesentlichen quer zur Fahrtrichtung (F) bzw. quer zur vertikalen Längsmittelebenen (5) um einen Betrag (ΔY) relativ zum Fahrgestell (8) verändert werden kann.

7. Vorrichtung nach Anspruch 3, **dadurch gekennzeichnet, dass** die Lage der Fahrerkabine (3) längs zur Fahrtrichtung (F) und relativ zum Fahrgestell (8) um einen Betrag (ΔX) verändert werden kann.

8. Vorrichtung nach Anspruch 3, **dadurch gekennzeichnet, dass** die Ausrichtung der Fahrerkabine durch Verdrehung um einen Winkel (β) um eine Hochachse (7) verändert werden kann.

9. Vorrichtung nach Anspruch 3, **dadurch gekennzeichnet, dass** die Veränderung der Lage (ΔH,ΔX,ΔY) und/oder der Ausrichtung (β) vom Fahrer von einem Steuerelement insbesondere von einem Joystick aus der Fahrerkabine (3) heraus durchgeführt werden kann.

10. Vorrichtung nach einem oder mehreren der Ansprüche 3 bis 9, **dadurch gekennzeichnet, dass** der Fahrerkabine (3) wenigstens ein Stellorgan (9) zugeordnet ist, welches die Lage und/oder Ausrichtung der Fahrerkabine relativ zum Fahrgestell (8) verändern kann.

11. Vorrichtung nach Anspruch 10, **dadurch gekennzeichnet, dass** das Stellorgan (9) als Hub- und Schwenkvorrichtung (13) ausgebildet ist.

12. Vorrichtung nach Anspruch 11, **dadurch gekennzeichnet, dass** die Hub- und Schwenkvorrichtung (13) wenigstens einen kraftbetätigten Hubarm (12) aufweist.

13. Vorrichtung nach Anspruch 12, **dadurch gekennzeichnet, dass** der wenigstens eine Hubarm (12) längenveränderbar ist.

14. Vorrichtung nach Anspruch 10 bis 13, **dadurch gekennzeichnet, dass** das Stellorgan (9) wenigstens ein Antriebselement zum Anheben oder Absenken der Fahrerkabine (3) aufweist.

15. Vorrichtung nach Anspruch 10 bis 13, **dadurch gekennzeichnet, dass** das Stellorgan (9) wenigstens ein Antriebselement zum Verschwenken der Fahrerkabine (3) um einen Winkel (β) aufweist.

16. Vorrichtung nach Anspruch 10 bis 13, **dadurch gekennzeichnet, dass** das Stellorgan (9) wenigstens ein Antriebselement zum Verschwenken der Fahrerkabine (3) um einen Winkel (α) aufweist.

17. Vorrichtung nach Anspruch 10 bis 13, **dadurch gekennzeichnet, dass** das Stellorgan (9) wenigstens ein Antriebselement zum Verschwenken der Hub- und Schwenkvorrichtung (13) um einen Winkel (α) aufweist.

18. Vorrichtung nach Anspruch 10 bis 13, **dadurch gekennzeichnet, dass** das Stellorgan (9) wenigstens einen Stellantrieb, ausgebildet als Hydraulik- oder Pneumatikzylinder, aufweist.

19. Vorrichtung nach Anspruch 10 bis 13, **dadurch gekennzeichnet, dass** das Stellorgan (9) wenigstens einen Stellantrieb, ausgebildet als Hydraulik-, Druckluft- oder Elektromotor aufweist.

20. Vorrichtung nach Anspruch 10 bis 19, **dadurch gekennzeichnet, dass** das Stellorgan (9) wenigstens einen Parallelogrammlenker (15;17) aufweist.

21. Vorrichtung nach Anspruch 10 bis 21, **dadurch gekennzeichnet, dass** dem Stellorgan (9) wenigstens eine erste Schwenkachse als Hochachse (7) aufweist.

22. Vorrichtung nach Anspruch 21, **dadurch gekennzeichnet, dass** die Fahrerkabine (3) um die Hochachse (7) verschwenkt werden kann.

23. Vorrichtung nach Anspruch 10 bis 22 **dadurch gekennzeichnet, dass** dem Stellorgan (9) eine zweite Schwenkachse als Hochachse (11) zugeordnet ist.

24. Vorrichtung nach Anspruch 23 **dadurch gekennzeichnet, dass** die Fahrerkabine (3) um die Hochachse (11) verschwenkt werden kann.
